Europäisches Patentamt

European Patent Office

Office européen des brevets

(19)

(11) Veröffentlichungsnummer : **0 184 192**
**B1**

(12) # EUROPÄISCHE PATENTSCHRIFT

(45) Veröffentlichungstag der Patentschrift :
09.08.89

(51) Int. Cl.⁴ : **H 04 N   3/19**

(21) Anmeldenummer : 85115337.9

(22) Anmeldetag : 03.12.85

(54) Hochspannungserzeuger.

(30) Priorität : 05.12.84 DE 3444254

(43) Veröffentlichungstag der Anmeldung :
11.06.86 Patentblatt 86/24

(45) Bekanntmachung des Hinweises auf die Patenterteilung : 09.08.89 Patentblatt 89/32

(84) Benannte Vertragsstaaten :
AT BE CH DE FR GB IT LI LU NL SE

(56) Entgegenhaltungen :
DE—A— 3 041 254
DE—A— 3 246 984
US—A— 3 886 434
US—A— 4 195 278

(73) Patentinhaber : TELEFUNKEN Fernseh und Rundfunk GmbH
Göttinger Chaussee 76
D-3000 Hannover 91 (DE)

(72) Erfinder : Goseberg, Walter, Dipl.-Ing.
Kopenhagener Strasse 81
D-3000 Hannover 91 (DE)

(74) Vertreter : Einsel, Robert, Dipl.-Ing.
TELEFUNKEN Fernseh und Rundfunk GmbH Göttinger Chaussee 76
D-3000 Hannover 91 (DE)

EP 0 184 192 B1

Jouve, 18, rue St-Denis, 75001 Paris, France

## Beschreibung

Die Erfindung betrifft einen Hochspannungserzeuger gemäß dem Oberbegriff des Patentanspruchs 1.

Bekanntlich bildet die Anode einer Fernsehbildröhre mit ihrem im Inneren des Glaskolbens angeordneten Belag in Verbindung mit einer außen auf dem Glaskolben aufgebrachten, mit Masse verbundenen abschirmenden Metallisierung einen Kondensator in einer Größenordnung von etwa 2.000 pF. Das Dielektrikum für diesen Kondensator besteht aus dem Glas des Glaskolbens der Bildröhre. Bei Anlegen einer Anodengleichspannung von mehreren KV wird der Kondensator aufgeladen und hält wegen der hohen Güte des vorhandenen Dielektrikums bei Abschalten des Gerätes diese Spannung über eine lange Zeit aufrecht. Diese im ausgeschalteten Zustand des Gerätes gespeicherte hohe Spannung ist unerwünscht, weil sie einerseits nach dem Abschalten ein unerwünschtes Aufleuchten des Bildschirmes bewirken kann, andererseits eine Gefahrenquelle bei evtl. Reparaturen darstellt und auch z. B. durch Ionisation von Staubpartikeln in der Nähe des Anodenanschlusses eine Staubablagerung begünstigt.

Um diese gespeicherte Spannung im ausgeschalteten Zustand abzubauen ist bekannt, einen hochohmigen Widerstand, auch Bleeder genannt, zwischen Anode und Masse zu schalten, der so bemessen ist, daß die Hochspannung durch den Strom im Bleeder nicht wesentlich beeinträchtigt wird, andererseits aber in einer vorgegebenen Zeit diese Spannung abgebaut wird. Dieser Widerstand muß aus Isolationsgründen mit besonderen konstruktiven Mitteln im Gerät befestigt werden.

So ist z. B. bekannt, den Bleeder konstruktiv mit dem Hochspannungsstecker, d. h. mit dem Anodenanschluß der Bildröhre zu vereinigen. Der Ableitwiderstand ist dabei in eine Rohrtülle zwischen dem Hochspannungskabel und dem Hochspannungsstecker eingelötet. Es ist auch bekannt, das dem Hochspannungsanschluß abgewandte Ende des Ableitwiderstandes über ein Potentiometer mit Masse zu verbinden und von diesem Potentiometer die Fokussierspannung für die Bildröhre abzugreifen.

Für die Realisierung einer derartigen Baugruppe in einem Farbfernsehempfänger sind mehrere, verhältnismäßig lange Verbindungsleitungen notwendig, da der die Hochspannung liefernde Hochspannungsgleichrichter sich im allgemeinen auf dem Gerätechassis befindet, die Hochspannung einen Anschluß im konusförmigen Bereich der Bildröhre und die Fokussierspannung bei dem Bildröhrensockel zugeführt werden muß.

Der Erfindung liegt die Aufgabe zugrunde, den konstruktiven Aufwand für die Anordnung und Kontaktierung der mit der Hochspannung verbundenen Bauteile zu verringern. Diese Aufgabe wird durch die im unabhängigene 1 Anspruch beschriebene Erfindung gelöst. Vorteilhafte Weiterbildungen der Erfindung sind in den abhängigen Ansprüchen beschrieben.

Im Prinzip besteht die Erfindung darin, daß der Bleeder bei Verwendung von zwei kleinen elektrisch leitfähigen Gummiteilen in einer innen liegenden Kammer der aus isolierendem Kunststoff bestehenden Haube des die Hochspannung erzeugenden Zeilentransformators ohne zusätzliche Befestigungsmittel nur durch die Klemmwirkung der Gummiteile angeordnet werden kann. Dieses geschieht, indem der Bleeder mit seinen Anschlußkontakten zwischen Isolierhaubenwand und den in Ausnehmungen der Haube fest angeordneten Gummiteilen eingeschoben wird. Durch diese Lösung werden die Anschlußkontakte des Bleeders mit den beiden Gummiteilen die vorzugsweise die Form eines Zylinders aufweisen, durch Klemmwirkung verbunden. Dabei sind die beiden zylinderförmigen Gummiteile innerhalb der Haube so angeordnet, daß bei Aufstecken der Haube auf den vormontierten Zeilentransformator ausgerichtete Drahtenden am Transformator in die Gummiteile eingeschoben werden, wodurch Bleeder und Transformatoranschlüsse ohne Lötvorgang miteinander kontaktiert werden.

Außerdem sind an der Außenseite der Haube Führungsröhren angebracht, die derart ausgebildet sind, daß für den Anodenanschluß und auch für den Fokusanschluß der Bildröhre hochspannungsfeste Kabel in diese Röhren eingesteckt werden können, wobei der abisolierte Teil, also der Innenleiter der Kabel, so geführt wird, daß dieser in die Leitgummiteile eindringt, wodurch ebenfalls ohne Lötvorgang eine elektrische Kontaktierung zwischen Hochspannungswicklung und Hochspannungskabel erfolgt.

Vorteilhaft ist, wenn die Hochspannungsgleichrichterdiode ebenfalls innerhalb der Isolierhaube angeordnet ist, wobei das gleichstromseitige Anschlußbein der Diode beim Montieren der Haube als ausgerichtetes Drahtende in das Leitgummi eindringt. Auf diese Weise können alle hochspannungsführenden Teile innerhalb der Isolierhaube des Zeilentrafos untergebracht werden und bilden somit eine Hochspannungseinheit.

In einer bevorzugten Ausführung der Erfindung wird der Bleeder elektrisch zwischen dem Hochspannungsanschluß und einer gesonderten Anzapfung der Hochspannungswicklung für die Fokusspannung geschaltet. Dadurch wird erreicht, daß der Bleeder in Verbindung mit dem Fokuspotentiometer ausschließlich für die Ableitung der Hochspannung im ausgeschalteten Zustand des Gerätes dient und nicht die Funktion als Teilerwiderstand für die Erzeugung der Fokusspannung herangezogen wird. Der Widerstandswert des Bleeders kann aus diesem Grunde von z. B. 170 MOhm auf 400-1.000 MOhm vergrößert werden, wodurch zwar die Zeit für das Abbauen der gespeicherten Spannung ansteigt, andererseits aber der Entladestrom verringert wird. Auch ist es möglich, einen Widerstand einzusetzen, der für eine wesentlich geringere Leistung ausgelegt ist.

Dadurch wird auch die Wärmeentwicklung innerhalb der Isolierhaube verringert.

Die Erfindung wird anhand der Zeichnungen an einem Ausführungsbeispiel erläutert.

Darin zeigen :

Fig. 1 und Fig. 2 in Schnittdarstellungen die in der Kammer der Isolierhaube angeordneten Bauteile,

Fig. 3 eine vereinfachte Schaltung für die Hochspannungserzeugung.

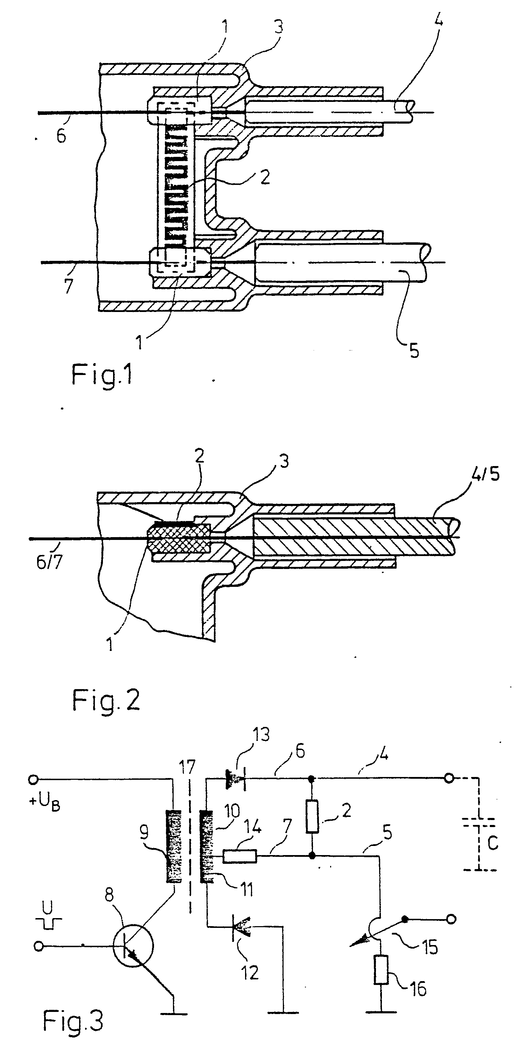

Die Figuren 1 und 2 zeigen in Schnittdarstellungen einen Teil einer den nicht dargestellten Zeilentransformator umgebenden Isolierhaube 3 und zwar die Kammer, in welcher der Ableitwiderstand oder auch Bleeder 2 angeordnet ist. Der Bleeder 2 in diesem Ausführungsbeispiel hat eine flache rechteckige Form. Die Widerstandsschicht ist meanderförmig auf einer isolierenden Grundplatte aufgebracht, wobei sich die metallisierten Kontaktanschlüsse an den Enden der Grundplatte flächenförmig ausbreiten. Wie in Fig. 2 gut zu erkennen ist, wird der Bleeder 2 zwischen Ausnehmungen in der Isolierhaube 3 durch die in diesen Ausnehmungen angeordneten Gummiteilen 1 eingeklemmt. Durch die federnde Wirkung der elektrisch leitenden Gummiteile ist der Bleeder in seiner Lage fixiert, wodurch außerdem eine gute Kontaktübertragung von den Kontaktflächen des Bleeders zu den Gummiteilen gewährleistet ist. Die zylinderförmigen Gummiteile haben etwa einen Durchmesser von 4 mm bei einer Länge von etwa 10 mm.

Bei Aufschieben der Isolierhaube mit eingelegtem Bleeder auf den soweit fertig montierten Zeilentransformator dringen fest mit dem Zeilentransformator verbundene, ausgerichtete Drahtenden 6,7 die z. B. aus den Anschlußbeinen von Dioden oder Widerständen bestehen, in die zylinderförmigen Leitgummiteile ein und stellen dadurch eine gute elektrische Verbindung zwischen den Wicklungen des Zeilentransformators und den Anschlußenden des Bleeders her.

Bei Montage des Zeilentransformators in einem Fernsehgerät müssen die Verbindungen zum Anoden- und Fokusanschluß der Bildröhre hergestellt werden. Dies geschieht durch Einschieben von vorher abisolierten Hochspannungskabeln 4 und 5 in die röhrenförmigen Anschlußführungen der Isolierhaube 3. Die abisolierte Länge der Innenleiter hat dabei ein fest vorgegebenes Maß, sodaß die Innenleiter dieser Kabel in das Leitgummi, wie in Fig. 2 dargestellt, eindringen und dadurch die hochspannungsführenden Bildröhrenelektroden mit den Spannungsquellen kontaktieren.

Fig. 3 zeigt in vereinfachter Darstellung eine Schaltung für Hochspannungserzeuger, die in diesem Beispiel Teil einer Zeilenablenkschaltung in einem Fernsehgerät ist, mit einem Endstufentransistor 8, der Primärwicklung 9 eines Zeilentransformators 17, mit zwei in Reihe geschalteten sekundären Hochspannungswicklungen 10 und 11, den Hochspannungsgleichrichtern 12 und 13, dem Bleeder 2 und einer Spannungsteilerschaltung für die Fokusspannung, bestehend aus den Widerständen 14, Fokuspotentiometer 15 und Widerstand 16. Das Anschlußbein 6 von Diode 13 sowie das Anschlußbein 7 von Widerstand 14 entsprechen den in Fig. 1 und in Fig. 2 mit den leitenden Gummiteilen 1 mittels Steckverbindung kontaktierten Leitungen 6 und 7. Die Leitung 4 stellt den Hochspannungsanschluß zur Anode einer nicht dargestellten Bildröhre her und ist ebenso, wie die Leitung 5, die zum Fokuspotentiometer 15 führt, durch Steckverbindung mit den gleichzeitig auch den Bleeder 2 kontaktierenden Leitgummiteilen 1, wie aus Fig. 1 und Fig. 2 ersichtlich, verbunden.

Der Transistor 8 wird von einer Schaltspannung U im Takte der Zeilenfrequenzimpulse gesteuert. In der Reihenschaltung der Sekundärwicklungen 10 und 11 wird eine Hochspannung induziert, die mittels der beiden Dioden 12 und 13 gleichgerichtet wird und über Leitung 4 der Anode der Bildröhre zugeführt wird. Damit sich der durch Anodenbelag und äußerer, mit Masse verbundenen Abschirmung der Bildröhre gebildete Kondensator C nach dem Abschalten des Gerätes entlädt, ist der Bleeder 2 eingeschaltet. Um den Bleeder 2 in einer Kammer des Gehäuses von Zeilentransformator 16 unterzubringen, wurde die elektrische Schaltung so ausgelegt, daß die Focusspannung von einer Anzapfung der Hochspannungswicklung abgenommen wird. Dadurch wirkt der Bleeder nicht als Vorwiderstand für die Focusspannungserzeugung und kann mit Rücksicht auf geringe Erwärmung sehr hochohmig, z. B. 400-1.000 MOhm, ausgeführt werden. Die masseseitige Verbindung des Bleeders geschieht über den Focusregler 15 und Widerstand 16.

**Patentansprüche**

1. Hochspannungserzeuger, insbesondere Zeilentransformator mit Hochspannungserzeugung für einen Fernsehempfänger, bei dem die Hochspannungsanschlüsse (6,7) mit den abgehenden Leitungen (4,5) über elektrisch leitfähige Gummiteile (1) kontaktiert und mit einem Ableitwiderstand (2) für die Hochspannung verbunden sind, dadurch gekennzeichnet, daß der Ableitwiderstand (2) in einer Kammer der aus Kunststoff bestehenden Isolierhaube (3) des Hochspannungserzeugers mit seinen Anschlußkontakten eng anliegend an den Gummiteilen (1) angeordnet ist, so daß ein elektrischer Kontakt gewährleistet ist.

2. Hochspannungserzeuger nach Anspruch 1, dadurch gekennzeichnet, daß bei Aufstecken der mit Ableitwiderstand und Gummiteilen versehenen Isolierhaube (3) vorgerichtete mit der Hochspannung verbindende Drahtenden (6,7) in die Gummiteile (1) eindringen.

3. Hochspannungserzeuger nach Anspruch 2, dadurch gekennzeichnet, daß die vorgerichteten Drahtenden (6,7) aus den Anschlußbeinen von Gleichrichterdioden und/oder Widerständen gebildet werden.

4. Hochspannungserzeuger nach Anspruch 1, dadurch gekennzeichnet, daß an der Kammer der Isolierhaube (3) Führungsröhren für den Anschluß von Hochspannungskabeln (4,5) angebracht sind.

5. Hochspannungserzeuger nach Anspruch 1, dadurch gekennzeichnet, daß die leitenden Gummiteile (1) zylinderförmig ausgebildet sind.

6. Hochspannungserzeuger nach Anspruch 1 und 5, dadurch gekennzeichnet, daß die zylinderförmigen Gummiteile (1) so in der Kammer angeordnet sind, daß in die eine Fläche des Zylinders ein Drahtende aus dem Hochspannungserzeuger und in die andere Fläche der Innenleiter eines Hochspannungskabels einsteckbar ist.

## Claims

1. High-voltage generator, in particular line transformer with high-voltage generation for a TV set, in which the high-voltage terminals (6, 7) are brought into contact with the outgoing leads (4, 5) via electrically conductive rubber parts (1) and are connected to a leakage resistor (2) for the high voltage, characterised in that the leakage resistor (2) is disposed in a compartment of the plastics cap (3) of the high-voltage generator with its terminal contacts butting closely against the rubber parts (1) so that an electrical contact is guaranteed.

2. High-voltage generator according to Claim 1, characterised in that on mounting of the insulating cap (3) provided with leakage resistor and rubber parts, prepared wire ends (6,7) connected to the high voltage penetrate into the rubber parts (1).

3. High-voltage generator according to Claim 2, characterised in that the prepared wire ends (6, 7) are formed from the terminal pins of diode rectifiers and/or resistors.

4. High-voltage generator according to Claim 1, characterised in that guide tubes for the connection of high-voltage cables (4, 5) are attached to the compartment of the insulating cap (3).

5. High-voltage generator according to Claim 1, characterised in that the conductive rubber parts (1) are cylindrical in shape.

6. High-voltage generator according to Claims 1 and 5, characterised in that the cylindrical rubber parts (1) are so disposed in the compartment that a wire end from the high-voltage generator can be inserted into one surface of the cylinder and the inner conductor of a high-voltage cable be inserted into the other surface.

## Revendications

1. Générateur de haute tension, notamment transformateur de lignes pour une haute tension pour un récepteur de télévision, et dans lequel les bornes (6, 7) à haute tension sont en contact avec les conducteurs de départ (4, 5), par l'intermédiaire de pièces en caoutchouc (1) électriquement conductrices, et sont reliées à une résistance de dérivation (2) pour la haute tension, caractérisé en ce que la résistance de dérivation (2) est disposée dans une chambre du capot isolant en matière plastique (3) du générateur de haute tension, les contacts de raccordement de la résistance étant appliqués étroitement contre les pièces en caoutchouc (1) de sorte qu'un contact électrique est garanti.

2. Générateur de haute tension la revendication 1, caractérisé en ce que, lors de l'enfichage du capot isolant (3) comportant les résistances de dérivation et les pièces en caoutchouc, des extrémités (6, 7) de fils, qui sont préalignées et sont reliées à la haute tension, pénètrent dans les pièces en caoutchouc (1).

3. Générateur de haute tension selon la revendication 2, caractérisé en ce que les extrémités alignées (6, 7) des fils sont formées par les pattes de raccordement de diodes redresseuses et/ou de résistances.

4. Générateur de haute tension selon la revendication 1, caractérisé en ce que des tubes de guidage pour le raccordement de câbles à haute tension (4, 5) sont installés dans la chambre du capot isolant (3).

5. Générateur de haute tension selon la revendication 1, caractérisé en ce que les pièces en caoutchouc conductrices (1) possèdent une forme cylindrique.

6. Générateur de haute tension selon les revendications 1 et 5, caractérisé en ce que les pièces en caoutchouc de forme cylindrique (1) sont disposées dans la chambre de telle sorte qu'une extrémité d'un fil partant du générateur de haute tension peut être enfichée dans une surface du cylindre et que le conducteur intérieur d'un câble à haute tension peut être enfiché dans l'autre surface.

Fig.1

Fig.2

Fig.3